# EUROPÄISCHE PATENTSCHRIFT

(11) **EP 0 913 559 B1**
(45) Veröffentlichungstag und Bekanntmachung des Hinweises auf die Patenterteilung: **12.05.2004**
(21) Anmeldenummer: 98117610.0
(22) Anmeldetag: 17.09.1998
(51) Int. Cl.: F01N 3/08, F01N 3/20

(54) **Verfahren zum Betrieb eines mehrzylindrigen Verbrennungsmotors**
Process for operating a multi-cylinder internal combustion engine
Procédé permettant de faire fonctionner un moteur à combustion interne

(30) Priorität: 29.10.1997 DE 19747671
(43) Veröffentlichungstag der Anmeldung: 06.05.1999
(60) Teilanmeldung: 04005266.4
(73) Patentinhaber: DaimlerChrysler AG, 70567 Stuttgart (DE)
(72) Erfinder: Boegner, Walter, 71686 Remseck (DE); Duvinage, Frank, Dr., 73230 Kirchheim (DE); Friess, Walter, 70597 Stuttgart (DE); Haak, Karl-Ernst, Dr., 73669 Lichtenwald (DE); Krutzsch, Bernd, Dr., 73770 Denkendorf (DE); Maly, Rudolf, Dr., 71065 Sindelfingen (DE); Pfeffer, Viktor, 73760 Ostfildern (DE); Pischinger, Stefan, Prof. Dr., 52076 Aachen (DE); Renner, Gregor, Dr., 70619 Stuttgart (DE); Voigtländer, Dirk, 70825 Korntal-Münchingen (DE); Weibel, Michel, Dr., 70619 Stuttgart (DE); Wenninger, Günter, 70599 Stuttgart (DE); Wirbeleit, Friedrich, Dr., 73733 Esslingen (DE)

(56) Entgegenhaltungen:
- EP-A- 0 627 548
- EP-A- 0 758 713
- WO-A-95/15431
- DE-C- 4 319 294
- DE-C- 19 628 796
- GB-A- 2 277 126
- US-A- 5 517 976
- US-A- 5 595 060

## Beschreibung

Die Erfindung bezieht sich auf ein Verfahren zum Betrieb eines mehrzylindrigen Verbrennungsmotors mit wenigstens einem Adsorberkatalysator im Abgasstrang des Verbrennungsmotors, wobei der Adsorberkatalysator periodisch wechselnd im Adsorptions- und Desorptionsbetrieb betrieben wird. Speziell bezieht sich die Erfindung auf solche Verfahren, bei denen des weiteren das den Adsorberkatalysator im Desorptionsbetrieb verlassende Abgas zur Eingangsseite des Verbrennungsmotors rückgeführt wird und/oder das Abgas vor Eintritt in den Adsorberkatalysator durch einen vorgeschalteten Oxidationskatalysator hindurchgeführt wird.

Ein Verfahren der eingangs genannten Art ist aus der Offenlegungsschrift DE 195 17 168 Al bekannt. Dabei wird ein NOx-Adsorptionskatalysator abwechselnd im Adsorptions- und im Desorptionsbetrieb betrieben, wobei im Desorptionsbetrieb des NOx-Adsorptionskatalysators im Verbrennungsmotor eine unvollständige Verbrennung erzeugt wird. Dazu ist eine Abgasrückführung in den Ansaugkrümmer des Verbrennungsmotors vorgesehen, die geeignet ist, die Verbrennungstemperatur im Motor zu reduzieren und/oder die Wahrscheinlichkeit von Zündaussetzern im Motor zu erhöhen. Durch eine derartige Abgasrückführung sowie ggf. durch weitere Maßnahmen, insbesondere eine Verzögerung des Zündzeitpunktes, eine Abmagerung des Luft/Kraftstoff-Gemisches im Motor oder ein intermittierendes Hemmen der Zündung in allen oder einzelnen Zylindern, wird der Verbrennungszustand in einem mit Fremdzündung arbeitenden Verbrennungsmotor verschlechtert, so daß nicht vollständig verbrannte Kraftstoffbestandteile in das Abgas des Verbrennungsmotors gelangen und im NOx-Adsorptionskatalysator eine ausreichende Desorption und Reduzierung der gespeicherten Stickoxide während des Desorptionsbetriebes ermöglichen.

Aus der Offenlegungsschrift DE 195 22 165 Al ist ein Verfahren zum Betrieb eines Verbrennungsmotors mit einem NOx-Adsorptionskatalysator bekannt, bei dem eine vorübergehende Erwärmung des NOx-Adsorptionskatalysators über die normale Betriebstemperatur hinaus zur Entfernung von Verunreinigungen vorgesehen ist. Dazu wird eine Erhöhung der Abgastemperatur durch motorinterne Maßnahmen vorgeschlagen, wobei insbesondere Kraftstoff im Abgastrakt nachverbrannt werden soll, indem sowohl unverbrannter Kraftstoff als auch überschüssige Luft in das Abgas des Verbrennungsmotors gebracht werden. Dies wird zum einen durch eine unvollständige Verbrennung in einem Teil der Motorzylinder sowie eine Verbrennung mit Luftüberschuß in einem anderen Teil der Motorzylinder erreicht. Ferner wird eine Verzögerung des Zündzeitpunktes bei gleichzeitiger Erhöhung der Ansaugluftmenge vorgeschlagen, wodurch sich ebenfalls eine Erhöhung der Abgastemperatur durch eine Nachverbrennung im Abgastrakt ergibt. Überdies wird ein angefettener Betrieb des Motors bei gleichzeitiger Zufuhr von Sekundärluft zum NOx-Adsorptionskatalysator mit gleicher Wirkung vorgeschlagen.

Aus der Patentschrift DE 43 19 294 Cl ist ein Verfahren zur Reduzierung von Stickoxiden im Abgas einer Brennkraftmaschine bekannt, bei dem ein NOx-Adsorptionskatalysator periodisch wechselnd im Adsorptions- und im Desorptionsbetrieb betrieben und das den im Desorptionsbetrieb arbeitenden Adsorptionskatalysator verlassende Abgas in die Ansaugluft der Brennkraftmaschine rezirkuliert wird, wobei speziell zwei parallel geschaltete Katalysatoren Anwendung finden können, die wechselweise im Adsorptions- und im Desorptionsbetrieb betrieben werden. Die im rückgeführten Abgas enthaltenen Stickoxidewerden in der Brennkraftmaschine umgesetzt, die deshalb kontinuierlich mit vollständiger Verbrennung betrieben werden kann.

Aus der Offenlegungsschrift JP 06 093 842 A ist eine Abgasreinigungsvorrichtung mit einem in einer Abgasleitung eines Verbrennungsmotors angeordneten NOx-Absorbens und einem stromaufwärts angeordenten Oxidationskatalysator bekannt. Das NOx-Absorbens absorbiert NOx, wenn das Luft-Kraftstoffverhältnis des einströmenden Abgases mager ist und setzt NOx frei, wenn die Sauerstoffkonzentration des einströmenden Abgases vermindert ist. Bei der Freisetzung von NOx aus dem Absorbens wird das einem Zylinder der Brennkraftmaschine zugeführte Gemisch fett eingestellt und eine Sekundärluftversorgung führt Sekundärluft einem Abgaskrümmer zu.

Aufgabe der Erfindung ist die Bereitstellung eines Verfahrens der eingangs genannten Art, das mit möglichst einfachen Mitteln eine verbesserte Abgasreinigung bei möglichst geringer Beeinträchtigung des Motorbetriebs gewährleistet.

Dieses Problem wird durch ein Verfahren mit den Merkmalen des Anspruchs 1 gelöst.

Bei dem Verfahren nach Anspruch 1 wird ein dem Adsorptionskatalysator vorgeschalteter Oxidationskatalysator zur Aufbereitung des zugeführten Abgases genutzt, wobei mit Hilfe einer fetten Nachverbrennung im Oxidationskatalysator, bei der nicht vollständig oxidierte Abgasbestandteile erzeugt werden, günstige Bedingungen für die Desorption im Adsorberkatalysator geschaffen werden.

In einer Ausgestaltung der Erfindung wird der Oxidationskatalysator während kurzer Regenerationsphasen mit erhöhter Temperatur betrieben, wodurch Ruß, Partikel oder Kohlenwasserstoffe, die sich zuvor auf dem Oxidationskatalysator niedergeschlagen haben könnten, entfernt werden. Die Regeneration des Oxidationskatalysators kann entweder während des Adsorptions- oder des Desorptionsbetriebs des nachgeschalteten Adsorberkatalysators erfolgen, je nachdem, welche Stoffe bei der Regeneration des Oxidationskatalysators freigesetzt werden.

Bei einem nach Anspruch 5 weitergebildeten Verfahren wird eine gegenüber dem Normalbetrieb erhöhte Abgastemperatur durch motorinterne Maßnahmen erreicht, die je nach Bedarf bei allen, meist aber nur bei einem Teil der Zylinder des Verbrennungsmotors bewirkt werden müssen. Die genannten Motorsteuerungsmaßnahmen sind kurzfristig gezielt einsetzbar, wobei eine Beschränkung auf einen Teil der Zylinder zu einer geringeren Beeinträchtigung von Leistung und Motorwirkungsgrad führt. Ferner ist damit die Erhöhung der Abgastemperatur genauer regelund steuerbar.

Bevorzugte Ausführungsbeispiele der Erfindung sind in den Zeichnungen dargestellt und werden nachfolgend beschrieben. Hierzu zeigen:
- Fig. 1: ein Blockdiagramm eines nach einem ersten Verfahrensbeispiel betreibbaren mehrzylindrigen Kraftfahrzeugverbrennungsmotors mit zugehöriger Abgasreinigungsanlage und
- Fig. 2: ein Blockdiagramm eines nach einem zweiten Verfahrensbeispiel betreibbaren mehrzylindrigen Kraftfahrzeugverbrennungsmotors mit zugehöriger Abgasreinigungsanlage.

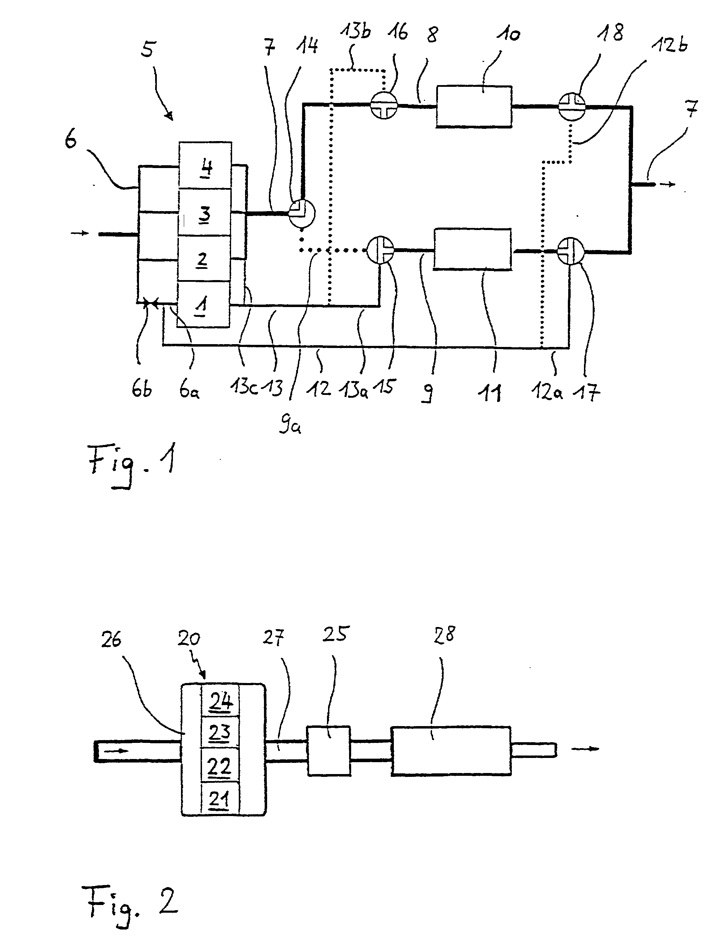

In Fig. 1 ist ein nach einem ersten erfindungsgemäßen Verfahren betreibbarer Kraftfahrzeugverbrennungsmotor in Form eines Hubkolbenmotors 5 dargestellt, der insgesamt vier Zylinder 1 bis 4 aufweist. Dem Hubkolbenmotor 5 ist ein Abgastrakt zugeordnet, der eine sich in einen rechten und einen linken Teilstrang 8, 9 verzweigende Hauptabgasleitung 7, eine Nebenabgasleitung 13, zwei NOₓ-Adsorberkatalysatoren 10, 11 und mehrere Schaltventile 14 bis 18 umfaßt. Der Hubkolbenmotor 5 erhält seine Verbrennungsluft durch den Ansaugkrümmer 6, der insbesondere einen Lufteinlaßkanal 6a mit einer Drosselklappe 6b aufweist, der speziell dem Zylinder 1 zugeordnet ist. Zwischen der Drosselklappe 6b und dem Lufteinlaß des Zylinders 1 mündet eine Abgasrückführungsleitung 12 in den Lufteinlaßkanal 6a.

Im normalen Leistungsbetrieb des Hubkolbenmotors 5 stoßen die Zylinder 1 bis 4 mit Schadstoffen wie CO, NOₓ oder Kohlenwasserstoffen belastetes Abgas aus, das über einen der herkömmlich gebauten NOₓ-Adsorberkatalysatoren 10, 11 geleitet wird.

In Fig. 1 ist der NOₓ-Adsorberkatalysator 10 im Adsorptionsbetrieb dargestellt, der mit dem Abgas des Hubkolbenmotors 5 beaufschlagt wird, das den Adsorberkatalysator 10 über den rechten Teilstrang 8 der Hauptabgasleitung 7 erreicht. Die Schaltventile 14, 16, 18 befinden sich dabei in der in Fig. 1 dargestellten Position, so daß das gereinigte Abgas aus dem Katalysator 10 über den rechten Teilstrang 8 und die Hauptabgasleitung 7 weiteren Abgasreinigungsvorrichtungen oder direkt der Umgebungsluft zugeleitet werden kann.

Der zweite NOₓ-Adsorberkatalysator 11 wird während der Adsorptionsphase des Adsorberkatalysators 10 nach einem erfindungsgemäßen Verfahren im Desorptionsbetrieb betrieben. Dazu wird ein Teil des Verbrennungsabgases des Zylinders 1 über die Nebenabgasleitung 13, einen Leitungszweig 13a und den linken Teilstrang 9 der Hauptabgasleitung dem Adsorberkatalysator 11 zugeführt, wobei der Zylinder 1 derart betrieben wird, daß er stickoxidund sauerstoffarmes sowie mit teiloxidierten Bestandteilen versehenes Abgas erzeugt, das für den Desorptionsvorgang im Adsorberkatalysator 11 besonders geeignet ist. Die Schaltventile 15 und 17 werden in ihre in Fig. 1 dargestellte Position gestellt, so daß zum einen der Adsorberkatalysator 11 ausschließlich mit dem Abgas des Zylinders 1 beaufschlagt wird, und zum anderen das aus dem Adsorberkatalysator 11 austretende Abgas über einen Leitungszweig 12a und die Abgasrückführungsleitung 12 in den Lufteinlaßkanal 6a des Zylinders 1 rezirkuliert wird. Dabei wird ferner die Ansaugluft des Zylinders 1 mit Hilfe der Drosselklappe 6b gedrosselt und die Kraftstoffzufuhr des Zylinders 1 in Abhängigkeit von der Luftzusammensetzung im Zylinder 1 eingestellt.

Darüber hinaus wird der Verbrennungsablauf im Zylinder 1 eines nach dem Dieselprinzip betriebenen Hubkolbenmotors 5 insbesondere durch eine optimale Kraftstoffeinspritzung derart betrieben, daß unter Vermeidung erhöhter Rußbildung die Stickoxidemissionen der Verbrennung im Zylinder 1 möglichst minimiert werden. Dazu ist eine geeignete Einspritzstrategie mit Vor-, Haupt- und Nacheinspritzung zu wählen, wobei die Einspritzzeitpunkte variabel anpaßbar sind. Ferner kann vorgesehen werden, Kraftstoff in den Saughub des Zylinders einzuspritzen und/oder den Zylinder 1 mit einem Luft-/Kraftstoffverhältnis λ≤1 zu betreiben.

Durch die vorgeschlagene Anordnung wird sichergestellt, daß das einer weiteren Abgasbehandlungseinrichtung oder der Umgebungsluft zuzuführende Abgas vollständig durch den im Adsorptionsbetrieb arbeitenden Adsorberkatalysator 10 geleitet wird, wobei derjenige Teil des Abgases des Zylinders 1, der über einen Leitungszweig 13c in die Hauptabgasleitung 7 gelangt, im Vergleich zum Hauptabgasstrom nur so groß ist, daß dort die Bedingungen, die für einen Adsorptionsbetrieb im Adsorberkatalysator 10 erforderlich sind, eingehalten werden. Dies wird insbesondere auch dadurch sichergestellt, daß die Zylinder 2, 3, 4 bei einem Betrieb nach dem Dieselprinzip naturgemäß bei einem Luft-/Kraftstoffverhältnis betrieben werden, das deutlich größer als eins ist. Der unveränderte Betrieb der Zylinder 2, 3, 4 stellt sicher, daß Leistung und Wirkungsgrad des Gesamtmotors von den Maßnahmen für den Desorptionsbetrieb des Adsorptionskatalysators 11 möglichst wenig beeinflußt werden.

Um die beiden NOₓ-Adsorptionskatalysatoren 10, 11 abwechselnd im Adsorptions- und im Desorptionsbetrieb zu betreiben, besteht durch eine entsprechende Umschaltung der Schaltventile 14 bis 18 die Möglichkeit, ausgehend von der Situation in Fig. 1, den Adsorberkatalysator 11 auf Adsorptionsbetrieb und den Adsorberkatalysator 10 gleichzeitig auf Desorptionsbetrieb umzuschalten. Dazu wird der Hauptabgasstrom über die Hauptabgasleitung 7, einen Leitungszweig 9a und den linken Teilstrang 9 dem Adsorberkatalysator 11 zugeleitet, während der Adsorberkatalysator 10 über die Nebenabgasleitung 13, einen punktiert gezeichneten Leitungszweig 13b und den rechten Teilstrang 8 mit dem Abgas des Zylinders 1 beaufschlagt wird. In diesem Fall wird das aus dem Adsorberkatalysator 10 austretende Abgas vollständig über die Abgasrückführungsleitungen 12b und 12 zum Zylinder 1 zurückgeführt.

Wird der Hubkolbenmotor 5 nach dem Ottoprinzip betrieben, kann während der Desorptionsphase des Adsorberkatalysators 11 in dem Zylinder 1 ein zur Stickoxidminderung besonders günstiges Luftverhältnis weitgehend fest eingestellt werden, so daß die Desorption in dem Adsorberkatalysator 11 bei näherungsweise konstanten Bedingungen erfolgen kann, wobei ein Luft-/Kraftstoffverhältnis von λ>1 in den Zylindern 2 bis 4 zu bevorzugen ist. Dadurch ergibt sich im Hauptabgasstrom ein ausreichender Restsauerstoffgehalt, der für die Adsorption im Adsorberkatalysator 10 günstig ist.

In einem modifizierten Ausführungsbeispiel erfolgt die Abgasrückführung nicht in den Lufteinlaßkanal 6a des Zylinders 1, sondern über den Ansaugkrümmer 6 in alle Zylinder gleichmäßig. In diesem Ausführungsbeispiel erfolgt somit eine Umsetzung der desorbierten Stickoxide in allen Zylindern des Hubkolbenmotors unabhängig von dessen Arbeitsprinzip, wobei weiterhin nur ein Teil der Zylinder, z.B. der Zylinder 1, derart betrieben wird, daß eine optimale Desorption im jeweils desorbierenden Adsorberkatalysator 10 bzw. 11 erreicht wird.

Ein zweites erfindungsgemäßes Verfahrensbeispiel ist für einen Verbrennungsmotor vorgesehen, der in Form eines nach dem Dieselprinzip arbeitenden Hubkolbenmotors 20 gemäß Fig. 2 ausgestaltet ist. Der Hubkolbenmotor 20 weist vier Zylinder 21 bis 24 auf, die ihr Verbrennungsgemisch über eine sogenannte Common-Rail-Einspritzanlage 26 erhalten, und in deren Hauptabgasleitung 27 ein Oxidationskatalysator 25 und ein NOₓ-Adsorberkatalysator 28 zur Abgasreinigung eingeschaltet sind.

Der Oxidationskatalysator ist in bekannter Weise möglichst motornah positioniert und oxidiert weitgehend unselektiv unverbrannte und teilverbrannte Bestandteile des Abgases. Der Adsorberkatalysator 28 wird in herkömmlicher Weise periodisch wechselnd im Adsorptions- und im Desorptionsbetrieb betrieben, wobei während seines Desorptionsbetriebes in dem Oxidationskatalysator 25 eine fette Nachverbrennung durchgeführt wird, bei der das Abgas des Hubkolbenmotors 20 unter Sauerstoffmangel derart nachbehandelt wird, daß eine große Menge an teiloxidierten Bestandteilen im Abgas erzeugt wird, so daß im Adsorberkatalysator 28 anschließend eine für die Desorption und die parallel ablaufende Reduktion von Stickoxiden geeignete Atmosphäre zur Verfügung gestellt wird.

Hierzu ist vorgesehen, bei einem Teil der Zylinder 21 bis 24 des Hubkolbenmotors 20 eine Kraftstoffzusatzeinspritzung vorzunehmen. Eine derartige Kraftstoffzusatzeinspritzung kann während des Saughubes in den Ansaugtrakt beliebiger Zylinder erfolgen, es ist jedoch auch eine Erhöhung der regulären Einspritzmenge oder eine späte Nacheinspritzung in den Brennraum einzelner Zylinder möglich. Durch derartige Maßnahmen wird erreicht, daß eine ausreichende Menge an unverbrannten oder teilverbrannten Kraftstoffanteilen in das Abgas gelangt, so daß im Oxidationskatalysator 25 die genannte fette Nachverbrennung stattfinden kann. Da eine derartige Verbrennungsführung in dem Dieselmotor 20 im allgemeinen eine erhöhte Ruß- und Partikelemission zur Folge hat, sind entsprechende Ablagerungen im Oxidationskatalysator 25 zu erwarten. Da derartige Ablagerungen wiederum die Funktion des Oxidationskatalysators 25 beeinträchtigen, sind kurze Regenerationsphasen für den Oxidaticnskatalysator vorgesehen, während denen die Ablagerungen entfernt werden. Dazu ist vorgesehen, den Oxidationskatalysator 25 mit einem Abgas zu beaufschlagen, dessen Temperatur auf 500°C bis etwa 800°C erhöht ist. Derartige Regenerationsphasen dauern für eine geeignete Regeneration etwa 0,5s bis 10s.

Erfindungsgemäß ist für die Abgastemperaturerhöhung das Einspritzen einer zusätzlichen Kraftstoffmenge in einer späten Verbrennungsphase eines Zylinders vorgesehen. Darüber hinaus dienen auch ein früheres Öffnen des Auslaßventils eines Zylinders und das Verstellen des Spritzbeginns der Haupteinspritzung hin zu einem späteren Zeitpunkt während des Arbeitstaktes eines Zylinders zu einer Abgastemperaturerhöhung. Die genannten Maßnahmen können sowohl in einem als auch in mehreren Zylindern des Hubkolbenmotors 20 durchgeführt werden, während die übrigen Zylinder unverändert weiterbetrieben werden. Durch die genannten Maßnahmen läßt sich die Abgastemperatur kurzzeitig sehr genau einstellen, so daß die Leistung des Gesamtmotors möglichst wenig beeinträchtigt wird.

Eine derartige Regenerationsphase des Oxidationskatalysators 25 kann sowohl während des Desorptionsbetriebes als auch während des Adsorptionsbetriebes des Adsorberkatalysators 28 erfolgen, wobei im erstgenannten Fall die genannten Motorsteuerungsmaßnahmen für einen oder mehrere Zylinder ggf. in Kombination vorgesehen werden.

## Patentansprüche

1. Verfahren zum Betrieb eines mehrzylindrigen Verbrennungsmotors (20) mit wenigstens einem Adsorberkatalysator (28) und einem dem Adsorberkatalysator (28) vorgeschalteten Oxidationskatalysator im Abgasstrang eines Verbrennungsmotors (20), wobei
- der Adsorberkatalysator (28) periodisch wechselnd im Adsorptions- und im Desorptionsmodus betrieben wird und
- während des Desorptionsbetriebs des Adsorberkatalysators (28) im Oxidationskatalysator (25) eine fette Nachverbrennung durchgeführt wird, bei der das Abgas des Verbrennungsmotors (20) unter Sauerstoffmangel derart nachbehandelt wird, dass zur Desorption und Reduktion von Stickoxiden im Adsorberkatalysator (28) teiloxidierte Bestandteile im Abgas erzeugt werden,
**dadurch gekennzeichnet, dass**
durch eine Kraftstoffzusatzeinspritzung bei wenigstens einem Teil der Zylinder des Verbrennungsmotors (20) dem Abgas eine für die Durchführung der fetten Nachverbrennung im Oxidationskatalysators (25) ausreichende Menge an unverbrannten und/oder teilverbrannten Kraftstoffanteilen zugesetzt wird.

2. Verfahren nach Anspruch 1,
**dadurch gekennzeichnet, dass**
die Kraftstoffzusatzeinspritzung während des Saughubes in den Ansaugtrakt beliebiger Zylinder des Verbrennungsmotors (20) erfolgt.

3. Verfahren nach Anspruch 1,
**dadurch gekennzeichnet, dass**
eine Erhöhung der regulären Einspritzmenge oder eine späte Nacheinspritzung in den Brennraum einzelner Zylinder des Verbrennungsmotors (20) erfolgt.

4. Verfahren nach einem der Ansprüche 1 bis 3,
**dadurch gekennzeichnet, dass**
der Oxidationskatalysator (25) während Regenerationsphasen zur Rußentfernung bei einer erhöhten Abgastemperatur von etwa 500° C bis etwa 800° C betrieben wird.

5. Verfahren nach Anspruch 4,
**dadurch gekennzeichnet, dass**
während der Regenerationsphasen des Oxidationskatalysator (25) die Erhöhung der Abgastemperatur gegenüber dem Normalbetrieb durch Einspritzen einer zusätzlichen Kraftstoffmenge in einer späten Verbrennungsphase, früheres Öffnen des Auslassventils und/oder Verstellen des Spritzbeginns der Haupteinspritzung in Richtung spät bei wenigstens einem Teil der Zylinder des Verbrennungsmotors (20) erfolgt.

6. Verfahren nach einem der Ansprüche 4 oder 5,
**dadurch gekennzeichnet, dass**
die Regenerationsphasen des Oxidationskatalysator (25) eine Dauer von etwa 0,5s bis 10s aufweisen.

7. Verfahren nach einem der Ansprüche 1 bis 6,
**dadurch gekennzeichnet, dass**
der Verbrennungsmotor (20) als ein nach dem Dieselprinzip arbeitender Hubkolbenmotor mit Common-Rail-Einspritzanlage (26) ausgeführt ist.

## Claims

1. Method for the operation of a multi-cylinder internal combustion engine (20) with at least one adsorption catalyser (28) and an oxidation catalyser connected upstream from the adsorption catalyser (28) in the exhaust gas line of the combustion engine (20), such that
- the adsorption catalyser (28) is operated in the adsorption mode and in the desorption mode in periodic alternation, and
- during the desorption mode operation of the adsorption catalyser (28) a rich afterburn takes place in the oxidation catalyser (25), in which the exhaust gas of the combustion engine (20) is after-treated under oxygen-deficient conditions in such manner that for the desorption and reduction of nitrogen oxides in the adsorption catalyser (28), partially oxidised constituents are produced in the exhaust gas,
**characterised in that**
by means of an additional fuel injection in at least some cylinders of the combustion engine (20), a quantity of uncombusted and/or partially combusted fuel fractions sufficient for carrying out the rich afterburn in the oxidation catalyser (25) is introduced into the exhaust gas.

2. Method according to Claim 1,
**characterised in that**
the additional fuel injection takes place during the intake stroke, into the intake duct of any desired cylinders of the combustion engine (20).

3. Method according to Claim 1,
**characterised in that**
the regular quantity of fuel injected is increased or a late after-injection is carried out in the combustion space of individual cylinders of the combustion engine (20).

4. Method according to any of Claims 1 to 3,
**characterised in that**
during regeneration phases to remove soot, the oxidation catalyser (25) is operated at a higher exhaust gas temperature of about 500°C up to about 800°C.

5. Method according to Claim 4,
**characterised in that**
during the regeneration phases of the oxygen catalyser (25), the temperature of the exhaust gas is increased, compared to normal operation, by injecting an additional quantity of fuel in a late combustion phase, earlier opening of the outlet valve, and/or displacement of the injection start of the main injection in the late direction, in at least some cylinder(s) of the combustion engine (20).

6. Method according to either of Claims 4 or 5,
**characterised in that**
the regeneration phases of the oxidation catalyser (25) last approximately 0.5 s to 10 s.

7. Method according to any of Claims 1 to 6,
**characterised in that**
the combustion engine (20) is designed as a reciprocating piston engine operating on the diesel principle with a common-rail injection unit (26).

## Revendications

1. Procédé pour le fonctionnement d'un moteur à combustion interne (20) à plusieurs cylindres, comportant au moins un catalyseur adsorbant (28) et un catalyseur d'oxydation agencé en amont du catalyseur adsorbant (28) dans le circuit d'échappement d'un moteur à combustion interne (20), dans lequel
- le catalyseur adsorbant (28) fonctionne périodiquement en alternance en mode d'adsorption et en mode de désorption, et
- pendant le fonctionnement en désorption du catalyseur adsorbant (28) une post-combustion riche est effectuée dans le catalyseur d'oxydation (25), pendant laquelle les gaz d'échappement du moteur à combustion interne (20) subissent un post-traitement sous manque d'oxygène de telle sorte qu'il se forme des composantes oxydées partiellement dans les gaz d'échappement pour la désorption et la réduction d'oxydes azotiques dans le catalyseur adsorbant (28),
**caractérisé en ce que**
par une injection de carburant supplémentaire dans au moins une partie des cylindres du moteur à combustion interne (20), on ajoute aux gaz d'échappement une quantité de parts de carburant non brûlées et/ou brûlées partiellement, qui suffit pour effectuer la post-combustion riche dans le catalyseur d'oxydation (25).

2. Procédé selon la revendication 1, **caractérisé en ce que** l'injection de carburant supplémentaire s'effectue pendant la course d'aspiration dans le circuit d'aspiration de cylindres quelconques du moteur à combustion interne (20).

3. Procédé selon la revendication 1, **caractérisé en ce que** l'on prévoit une augmentation de la quantité d'injection régulière ou une post-injection tardive dans la chambre de combustion de cylindres individuels du moteur à combustion interne (20).

4. Procédé selon l'une des revendications 1 à 3, **caractérisé en ce que** l'on fait fonctionner le catalyseur d'oxydation (25) pendant des phases de régénération pour l'élimination de suie à une température accrue des gaz d'échappement d'environ 500°C à environ 800°C.

5. Procédé selon la revendication 4, **caractérisé en ce que** pendant les phases de régénération du catalyseur d'oxydation (25), l'augmentation de la température des gaz d'échappement par rapport au fonctionnement normal s'effectue par injection d'une quantité de carburant supplémentaire dans une phase de combustion tardive, par ouverture précoce de la soupape d'échappement et/ou par décalage du début de l'injection principale dans le sens tardif pour une partie au moins des cylindres du moteur à combustion interne (20).

6. Procédé selon l'une ou l'autre des revendications 4 et 5, **caractérisé en ce que** les phases de régénération du catalyseur d'oxydation (25) présentent une durée d'environ 0,5 s à 10 s.

7. Procédé selon l'une des revendications 1 à 6, **caractérisé en ce que** le moteur à combustion interne (20) est réalisé sous la forme d'un moteur à piston alternatif qui fonctionne selon le principe diesel et qui comprend une installation d'injection du type "common-rail" (26).
